# EUROPEAN PATENT APPLICATION

(11) **EP 4 016 712 A1**
(43) Date of publication of application: **22.06.2022**
(21) Application number: 21865336.8
(22) Date of filing: 19.07.2021
(51) Int. Cl.: H01M 50/20, H01M 10/6556, H01M 10/6554, H01M 10/625, H01M 10/613, H01M 10/6568, B60L 50/60, B60L 50/64

(54) **BATTERY MODULE, BATTERY PACK, AND VEHICLE COMPRISING SAME**

(30) Priority: 25.09.2020 KR 20200124614
(71) Applicant: LG ENERGY SOLUTION, LTD., Seoul 07335 (KR)
(72) Inventor: PARK, Won Kyoung, Daejeon 34122 (KR); HAN, Honggoo, Daejeon 34122 (KR); SEONG, Junyeob, Daejeon 34122 (KR); YUN, Hyun Seop, Daejeon 34122 (KR)
(74) Representative: Plasseraud IP
(86) International application number: PCT/KR2021/009231
(87) International publication number: WO 2022/065650

(57) **Abstract**

A battery module according to one embodiment of the present disclosure includes first and second cell block assemblies that include a battery cell stack and are arranged along a direction perpendicular to the stacking direction of the battery cell stack; a module frame that houses the first and second cell block assemblies and is opened in a front and rear direction; and a cooling plate arranged below the bottom portion of the module frame, wherein a flow path through which refrigerant flows is formed in the cooling plate, and the flow path is formed in a direction parallel to the arrangement direction of the first and second cell block assemblies.

## Description

### [TECHNICAL FIELD]

### Cross Citation with Related Applications)

This application claims the benefit of Korean Patent Application No. 10-2020-0124614 filed on September 25, 2020 with the Korean Intellectual Property Office, the disclosure of which is incorporated herein by reference in its entirety.

The present disclosure relates to a battery module, a battery pack, and a vehicle including the same, and more particularly, to a battery module having an expandable structure, a battery pack and a vehicle including the same.

### [BACKGROUND ART]

A secondary battery has attracted much attention as an energy source in various products such as a mobile device and an electric vehicle. The secondary battery is a potent energy resource that can replace the use of existing products using fossil fuels, and is in the spotlight as an environment-friendly energy source because it does not generate by-products due to energy use.

Recently, along with a continuous rise of the necessity for a large-capacity secondary battery structure, including the utilization of the secondary battery as an energy storage source, there is a growing demand for a battery pack of a multi-module structure which is an assembly of battery modules in which a plurality of secondary batteries are connected in series/parallel.

Meanwhile, when a plurality of battery cells are connected in series/parallel to configure a battery pack, a method of configuring a battery module composed of at least one battery cell and then adding other components to at least one battery module to configure a battery pack is common.

The battery module may include a battery cell stack in which a plurality of battery cells are stacked, a module frame for housing the battery cell stack, and an insulating cover and an end plate for covering the front and rear surfaces of the battery cell stack.

Conventionally, a busbar frame was mounted on the front and rear surfaces of the battery cell stack located in a direction perpendicular to the stacking direction of the battery cell stack constituting the battery module. Also, an insulating cover was attached to the outer side surface of the busbar frame to cut off an electrical connection between the battery cell stack and the busbar frame and the outside. In addition, an end plate was mounted on the outer side surface of the insulating cover to physically protect the battery cell stack and the electrical components connected thereto. However, when the battery module is produced by separately providing the insulating cover and the end plate in this manner, the structure of the battery module may become complicated.

On the other hand, recently, in the case of a battery module mounted on a vehicle, various types of battery module structures have been released in order to efficiently utilize a space inside the vehicle. As the number of cell blocks increases, there is a demand for an expandable battery module structure capable of utilizing the space inside the vehicle.

In this case, in the case of an expandable battery module structure including at least two or more cell blocks, it may be necessary to separately provide an insulating cover and an end plate for each battery cell stack at the time of applying the structure of the conventional end plate and the insulating cover, which may increase the weight of the battery module, lengthen the production process, and make the battery module structure itself complicated.

### [DETAILED DESCRIPTION OF THE INVENTION]

### [Technical Problem]

It is an object of the present disclosure to provide a battery module that is simplified in expandable battery module structure, a battery pack and a vehicle including the same.

The objects of the present disclosure are not limited to the aforementioned objects, and other objects which are not described herein should be clearly understood by those skilled in the art from the following detailed description.

### [Technical Solution]

According to one embodiment of the present disclosure, there is provided a battery module comprising: first and second cell block assemblies that include a battery cell stack and are arranged along a direction perpendicular to the stacking direction of the battery cell stack; a module frame that houses the first and second cell block assemblies and is opened in a front and rear direction; and a cooling plate arranged below the bottom portion of the module frame, wherein a flow path through which refrigerant flows is formed in the cooling plate, and the flow path is formed in a direction parallel to the arrangement direction of the first and second cell block assemblies.

The cooling plate includes a plurality of partition walls protruding upward from the bottom surface, and the partition walls may be formed to extend in a direction parallel to an arrangement direction of the first and second cell block assemblies to form the flow path between the partition walls.

The partition wall may be formed so as to be separated from the front and rear end portions of the cooling plate.

A bottom portion of the module frame may be located at an upper side portion of the flow path.

The cooling plate may be formed in a size corresponding to the bottom portion of the module frame.

The cooling plate may be joined by welding to the bottom portion of the module frame.

According to another embodiment of the present disclosure, there is provided a battery pack comprising: a battery module including first and second cell block assemblies; and at least one additional battery module including first and second cell block assemblies that are further arranged in a direction perpendicular to a direction in which the first and second cell block assemblies face each other.

All front end portions of the flow paths of the cooling plates formed in the battery module and the additional battery module are connected to receive supply of a refrigerant through a refrigerant supply portion connected thereto, and all rear end portions of the flow paths of the cooling plates are connected to discharge the refrigerant through a refrigerant discharge portion connected thereto.

The refrigerant supply portion is connected to an inlet to receive supply of the refrigerant, and the refrigerant discharge portion is connected to an outlet to discharge the refrigerant.

According to yet another embodiment of the present disclosure, there is provided a vehicle comprising the battery pack, wherein a direction in which the additional battery module is mounted based on the battery module is a longitudinal direction.

### [ADVANTAGEOUS EFFECTS]

According to embodiments of the present disclosure, the end plate and insulating cover structure, which was conventionally used in the expandable battery module structure, can be removed, thereby reducing the weight of the battery module, improving the assembling properties, reducing the production cost of the battery module, and reducing the parts management cost by reducing the number of parts.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is an exploded perspective view showing a battery module according to one embodiment of the present disclosure;
Fig. 2 is a perspective view showing a state in which the battery module of Fig. 1 is assembled.
Fig. 3 is a top view of Fig. 2 as viewed from above.
Fig. 4 is a perspective view showing an upper plate according to one embodiment of the present disclosure;
Fig. 5 shows a section A-A of Fig. 2, which is a cross-sectional view of a battery module according to one embodiment of the present disclosure;
Fig. 6 shows a comparative example, which is a diagram showing a structure in which an end plate is included in a conventional battery module;
Fig. 7 is a view showing the appearance of the additional battery module that is expanded and mounted according to one embodiment of the present disclosure; and
Fig. 8 is a diagram showing a flow path structure in the battery pack unit expanded according to Fig. 7.

### [DETAILED DESCRIPTION OF THE EMBODIMENTS]

It should be appreciated that the exemplary embodiments, which will be described below, are illustratively described to assist in the understand the present disclosure, and the present disclosure can be variously modified to be carried out differently from the exemplary embodiments described herein. However, in the description of the present disclosure, the specific descriptions and illustrations of publicly known functions or constituent elements will be omitted when it is determined that the specific descriptions and illustrations may unnecessarily obscure the subject matter of the present disclosure. In addition, in order to help understand the present disclosure, the accompanying drawings are not illustrated based on actual scales, but parts of the constituent elements may be exaggerated in size.

As used herein, terms such as first, second, and the like may be used to describe various components, and the components are not limited by the terms. The terms are used only to discriminate one component from another component.

Further, the terms used herein are used only to describe specific exemplary embodiments, and are not intended to limit the scope of the present disclosure. A singular expression includes a plural expression unless they have definitely opposite meanings in the context. It should be understood that the terms "comprise", "include", and "have" as used herein are intended to designate the presence of stated features, numbers, steps, movements, constitutional elements, parts or combinations thereof, but it should be understood that they do not preclude a possibility of existence or addition of one or more other features, numbers, steps, movements, constitutional elements, parts or combinations thereof.

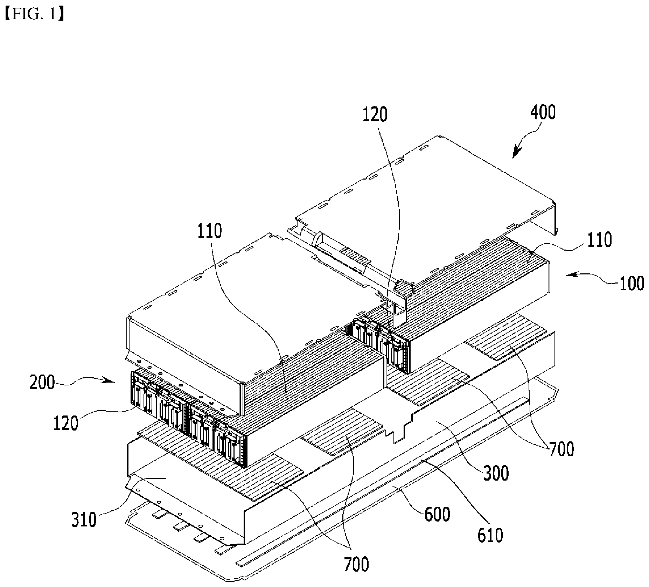

Hereinafter, a battery module according to one embodiment of the present disclosure will be described with reference to Figs. 1 to 5 and Fig. 8.

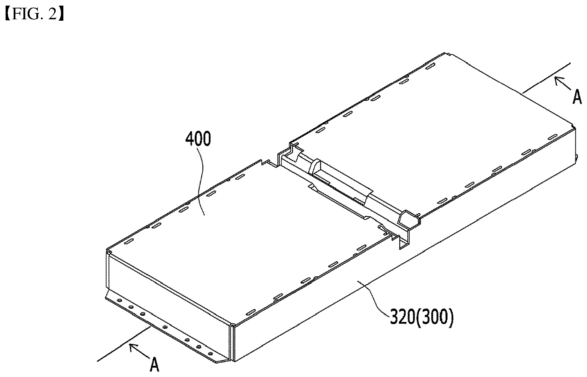

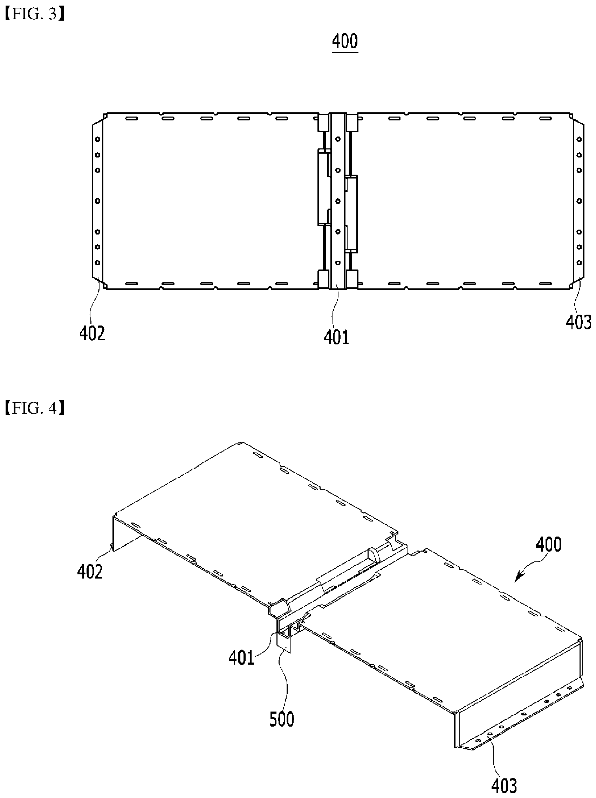

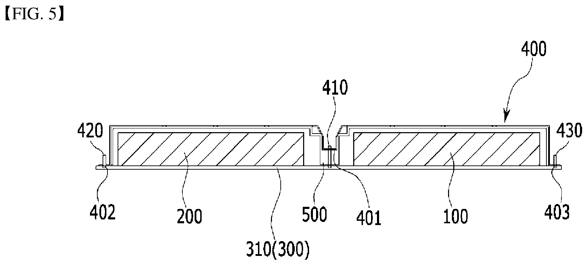

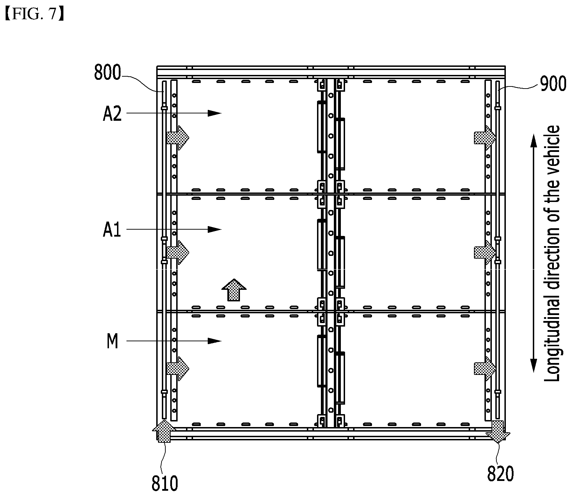

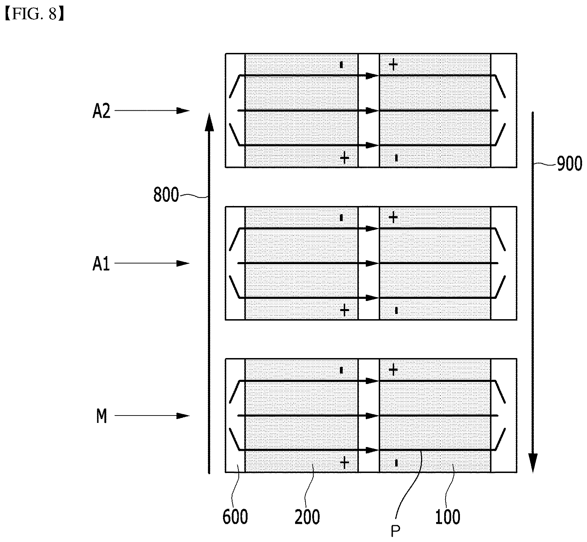

Fig. 1 is an exploded perspective view showing a battery module according to one embodiment of the present disclosure. Fig. 2 is a perspective view showing a state in which the battery module of Fig. 1 is assembled. Fig. 3 is a top view of Fig. 2 as viewed from above. Fig. 4 is a perspective view showing an upper plate according to one embodiment of the present disclosure. Fig. 5 shows a section A-A of Fig. 2, which is a cross-sectional view of a battery module according to one embodiment of the present disclosure. Fig. 8 is a diagram showing a flow path structure in the battery pack unit expanded according to Fig. 7.

Referring to Figs. 1 to 5 and Fig. 8, a battery module according to one embodiment of the present disclosure includes first and second cell block assemblies 100 and 200 that include a battery cell stack 110 and a busbar frame 120 mounted on front and rear surfaces of the battery cell stack 110, a module frame 300 that houses the first and second cell block assemblies 100 and 200 and is opened in a front and rear direction, and a cooling plate 600 arranged below the bottom portion 310 of the module frame 300. The module frame 300 may be U-shaped.

At this time, a flow path P through which refrigerant flows is formed in the cooling plate 600, and the flow path P is formed in a direction parallel to the arrangement direction of the first and second cell block assemblies 100 and 200.

The battery cell according to embodiments of the present disclosure is a secondary battery, and may be configured into a pouch-type secondary battery. Such a battery cell may be composed of a plurality of cells, and the plurality of battery cells can be mutually stacked so as to be electrically connected to each other, thereby forming the battery cell stack 100. Each of the plurality of battery cells may include an electrode assembly, a cell case, and an electrode lead protruding from the electrode assembly.

According to embodiments of the present disclosure, it may be formed of a large-area cell block in which the number of battery cells to be stacked is significantly increased compared to a conventional case. The large-area cell block may include the case where about 32 to 48 battery cells are stacked in one cell block to constitute a battery cell stack 110, compared to the conventional case where about 12 to 24 battery cells are stacked in one cell block.

The module frame 300 may house the first and second cell block assemblies 100 and 200. The module frame 300 is formed of a bottom portion 310 and both side surface portions 320, and may cover the entire lower surface portion and both side surface portions of the first and second cell block assemblies 100 and 200. More specifically, the first and second cell block assemblies 100 and 200 are arranged to be separated from each other in a direction in which the busbar frames face each other, and the module frame 300 is formed in a size that houses the first and second cell block assemblies 100 and 200 and up to a separation space between them, and can house the first and second cell block assemblies 100 and 200. At this time, the first and second cell block assemblies 100 and 200 may be arranged along a direction perpendicular to the stacking direction of the battery cell stack 110.

According to the present embodiment, it includes an upper plate 400 that covers the upper side surface and the front and back surfaces of the first cell block assembly 100, and the upper side surface and the front and back surfaces of the second cell block assembly 200. At this time, the first and second cell block assemblies 100 and 200 are arranged so that the busbar frames 120 mounted on the first and second cell block assemblies 100 and 200 are separated from each other in a direction facing each other, and the upper plate 400 is coupled to the bottom portion of the module frame 300 between the first and second cell block assemblies 100 and 200 and in front and rear of the entire first and second cell block assemblies 100 and 200.

The upper plate 400 may have a shape in which a plurality of concavo-convex portions are formed so as to integrally cover the upper and front surfaces of the first cell block assembly 100 and the upper and front surfaces of the second cell block assembly 200. The upper plate 400 is formed so as to cover all the portions where the busbar frames 120 are located, and at the same time, may be formed so as to cover the upper surfaces of the first and second cell block assemblies 100 and 200.

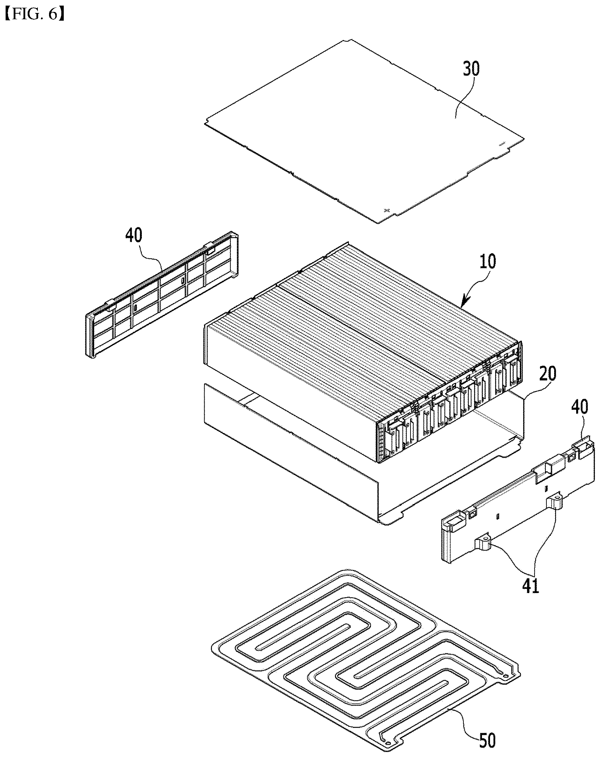

Fig. 6 shows a comparative example, which is a diagram showing a structure in which an end plate is included in a conventional battery module.

Conventional battery modules include a battery cell stack 10 formed in a large area, a module frame 20 for housing the battery cell stack 10, an upper plate 30 for covering the upper surface of the battery cell stack 10, end plates 40 for covering the front and rear surfaces of the battery cell stack 10, and a heat sink 50 formed below the bottom surface of the module frame 20.

At this time, in addition to the module frame 20 that houses the battery cell stack 10, an upper plate 30 that covers the upper surface and an end plate 40 that covers the front and rear surfaces are separately provided, thereby forming a frame structure of the battery cell stack 100. However, in the case of the structure of the end plate 40, as shown in Fig. 6, it contains a substructure that requires strength at a prescribed level or more, for example, it is formed in a size that covers all of one side surface of the battery cell stack 10 formed in a large area, a module mounting part 41 for mounting on a battery pack is formed on one side, etc. Thus, the weight of the end plate 40 may occupy a considerable part of the total weight of the battery module. Further, since the upper plate 30 and the end plate 40 must be separately mounted in addition to the module frame 20, there is a problem that the assembly process is complicated.

Further, in the case of an expandable battery module structure in which two cell blocks are arranged as in the present disclosure, the weight of the battery module becomes considerably larger, and the structure of the battery module becomes relatively complicated as compared with the battery module including the single cell block shown in Fig. 6. Therefore, a compact structure is necessarily required to reduce the weight of the battery module and simplify the structure.

Thus, according to the present embodiment, the integrally formed upper plate 400 can be used to cover the sections provided with the busbar frame 120 of the first and second cell block assemblies 100 and 200. Thereby, the end plate provided with conventional battery modules can be removed, and both the upper surface portion and the front and rear surface portions of the two cell block assemblies can be covered by one upper plate 400, thereby reducing the weight occupied by the conventional end plate and simplifying the structure of the expandable large area battery module.

According to the present embodiment, as shown in Fig. 5, an insulating film 500 may be formed on the inner side surface of the upper plate 400. Conventionally, a structure was adopted in which an insulating film is further arranged between the end plate and the busbar frame, but a separate process for assembling the insulating film between the busbar frame and the end plate was required. Therefore, according to the present embodiment, the insulating film 500 can be attached to the inner side surface of the upper plate 400, so that when assembling the upper plate 400, the insulating film 500 can be attached to the battery module at the same time, and thus, the insulating property of the battery module can be ensured only by a simple assembly process.

According to the present embodiment, a thermally conductive resin layer 700 may be formed between the first and second cell block assemblies 100 and 200 and the bottom portion 310 of the module frame 300. The thermally conductive resin layer 700 may be formed at the front and rear lower ends of the first cell block assembly 100 and the front and rear lower ends of the second cell block assembly 200, respectively. The thermally conductive resin layer 700 may perform the function of transferring heat generated from the first and second cell block assemblies 100 and 200 to the outside. The thermally conductive resin layer may include a thermal resin.

According to the present embodiment, the cooling plate 600 may be located below the bottom portion 310 of the module frame 300. A refrigerant can flow inside the cooling plate 600 to cool the battery module. The refrigerant flow path may be formed between the cooling plate 600 and the bottom portion 310. Thereby, unlike the conventional cooling structure in which a separate heat sink is provided, a structure in which the refrigerant flows so that the bottom portion 310 becomes a part of the refrigerant flow path can be adopted, thereby improving the cooling performance of the battery module and reducing the weight of the battery module.

According to the present embodiment, a flow path P formed in the cooling plate 600 may be formed in a direction parallel to the arrangement direction of the first and second cell block assemblies 100 and 200. Referring to Fig. 6 according to the comparative example, the flow path of a heat sink 50 according to the comparative example adopts an S-shaped flow path structure, so that the pressure loss of the flow becomes relatively large due to the S-type flow path structure when the refrigerant flows. On the other hand, according to the present embodiment, as shown in Figs. 1 and 8, the flow path P is formed in a linear shape, so that the pressure loss can be minimized when the refrigerant flows, and the cooling performance can be improved by moving the refrigerant at a high flow rate as compared with the flow path structure according to the comparative example.

Since the battery module according to the present embodiment may be mounted on a vehicle, a refrigerant may flow through a compression pump provided in the vehicle. At this time, when the battery module having the structure of the cooling plate 600 according to the present embodiment is mounted on a vehicle, it is possible to realize the flow of the refrigerant having a relatively high flow rate based on the cooling plate structure having a linear flow path, even if the compression pump provided in the vehicle has relatively low performance.

According to the present embodiment, the cooling plate 600 may include a plurality of partition walls 610 protruding upward from the bottom surface. The partition walls 610 are formed to extend in a direction parallel to the arrangement direction of the first and second cell block assemblies 100 and 200, so that a flow path P can be formed between the partition walls 610. At this time, the partition wall 610 may be formed to be separated from the front and rear end portions of the cooling plate 600.

Therefore, the refrigerant flown into the front end portion of the cooling plate 600 may be flown into the flow paths P formed between partition walls extending in a linear shape and then can be discharged through the rear end portion of the cooling plate 600 again.

The battery module according to this embodiment may have a cooling integrated structure in which the cooling plate 600 is integrally formed in the bottom portion 310 of the module frame 300.

Conventionally, a structure in which the refrigerant flows is separately formed on the lower side of the module frame and thus, the module frame has no choice but to cool indirectly. Therefore, the cooling efficiency is reduced, and a separate refrigerant flowing structure is formed, which causes a problem that the space utilization rate on a battery module and a battery pack on which the battery module is mounted is reduced.

However, according to one embodiment of the present disclosure, a structure in which the cooling plate 600 is integrated on the lower surface of the module frame 300 is adopted, and designed so that the refrigerant can flow directly between the cooling plate 600 and the bottom portion 310 of the module frame 300, thereby increasing the cooling efficiency due to direct cooling. Further, through a structure in which the cooling plate 600 and the bottom portion 310 of the module frame 300 are integrated, the space utilization rate on a battery module, a battery pack on which the battery module is mounted, and a vehicle on which the battery pack is mounted can be further improved. Specifically, the bottom portion 310 of the module frame 300 may be located at an upper side of the flow path through which refrigerant flows, that is, at the upper side portion of the flow path.

According to the present embodiment, as shown in Fig. 1, the cooling plate 600 may be formed in a size corresponding to the bottom portion 310 of the module frame 300, and the edge of the cooling plate 600 may be coupled by welding to the bottom portion 310 of the module frame 300. Thereby, the cooling plate 600 and the battery module are formed in a unit size, so that an additional battery module can be mounted on the side surface of the existing battery module, thereby realizing a battery pack structure that can be expanded and mounted.

The upper plate 400 may be coupled with the bottom portion 310 of the module frame 300. More specifically, a first coupling member 410 is located between the first and second cell block assemblies 100 and 200, second and third coupling members 420 and 430 are located at the front and rear of the entire first and second cell block assemblies 100 and 200, and the coupling members 410 , 420 and 430 can allow the coupling of the upper plate 400 and the module frame 300.

Taking a closer look at the coupling structure of the upper plate 400 and the module frame 300, the upper plate 400 may include an intermediate bottom portion 401 formed between the first and second cell block assemblies 100 and 200, and front and rear end bottom portions 402 and 403 formed at the front and rear of the entire first and second cell block assemblies 100 and 200. At this time, referring to Fig. 5, an intermediate bottom portion 401 is separated from the bottom portion 310 of the module frame 300, and the first coupling member 410 may connect and couple the intermediate bottom portion 401 and the bottom portion 310 of the module frame 300.

According to the present embodiment, an insulating film 500 cam be formed so as to be separated from the intermediate bottom portion 401 between the first and second cell block assemblies 100 and 200, and also to make contact with the bottom portion 310 of the module frame 300. Further, the front and rear end bottom portions 402 and 403 may make contact with the bottom portion 310 of the module frame 300, and can be coupled to each other by the second and third coupling members 420 and 430.

Both ends and a central portion of the upper plate 400 are formed with the bottom portions that can be coupled with the module frame 300, and a portion where the bottom portions and the bottom portion of the module frame 300 meet is coupled through coupling members, so that the upper plate 400 and the module frame 300 can be firmly coupled. At the same time, the two cell block assemblies located between the upper plate 400 and the module frame 300 can be physically protected.

Below, a battery pack and a vehicle including the same according to one embodiment of the present disclosure will be described with reference to Figs. 1, 7 and 8.

Fig. 7 is a view showing the appearance of the additional battery module that is expanded and mounted according to one embodiment of the present disclosure.

Referring to Figs. 1, 7 and 8, a battery pack according to one embodiment of the present disclosure includes a battery module including first and second cell block assemblies 100 and 200, and at least one additional battery module A1, A2... including first and second additional cell block assemblies that are further arranged in a direction perpendicular to the direction in which the first and second cell block assemblies 100 and 200 face each other.

According to the present embodiment, as shown in Figs. 7 and 8, in a vehicle equipped with an existing battery module M, an expandable battery pack structure can be adopted by arranging additional battery modules A1, A2.... At this time, the additional battery modules A1, A2... can be arranged along the longitudinal direction of the vehicle, so that the battery structure can be made into a platform and the module unit of the battery pack can be easily changed according to the type of vehicle. That is, the battery pack according to the present embodiment may be formed in a structure that ensures the expandability of the battery module.

At this time, the direction in which the additional battery modules A1 , A2 ... are installed on the basis of a battery module M may be a longitudinal direction of the vehicle. As the car becomes larger in size, the overall length of the vehicle may become longer. The additional battery modules A1, A2... can also be further installed in a direction corresponding to an increase in the overall length of the vehicle.

Referring now to Fig. 8, all the front end portions of the flow paths P of the cooling plates 600 formed in the battery module M and the additional battery modules A1, A2... are connected so that refrigerant is supplied through a refrigerant supply portion 800 connected thereto. All the rear end portions of the flow paths P of the cooling plates 600 are connected, so that the refrigerant can be discharged through a refrigerant discharge portion 900 connected thereto. At this time, the refrigerant supply portion 800 can be connected to an inlet 810 to receive supply of the refrigerant, and the refrigerant discharge portion 900 can be connected to an outlet 910 to discharge the refrigerant.

As described above, the refrigerant supply portion 800 and the refrigerant discharge portion 900 are formed in the longitudinal direction along the expandable mounting position of the additional battery modules A1, A2...., so that the refrigerant flowing into the plurality of battery modules can be effectively supplied only by expanding the refrigerant supply portion 800 and the refrigerant discharge portion 900 in the longitudinal direction, even when the additional battery modules A1, A2... are provided.

The above-mentioned battery module can be included in the battery pack. The battery pack may have a structure in which one or more of the battery modules according to the embodiment of the present disclosure are gathered, and packed together with a battery management system (BMS) and a cooling device that control and manage battery's temperature, voltage, etc.

According to the embodiments of the present disclosure, the battery pack can be applied to a vehicle. Further, such a device can be applied to a vehicle means such as an electric bicycle, an electric vehicle, or a hybrid vehicle, but the present disclosure is not limited thereto, and is applicable to various devices that can use a battery module, which also falls under the scope of the present disclosure.

Although the invention has been shown and described above with reference to the preferred embodiments, the scope of the present disclosure is not limited thereto, and numerous other modifications and embodiments can be devised by those skilled in the art, without departing from the spirit and scope of the principles of the invention described in the appended claims. Further, these modified embodiments should not be understood individually from the technical spirit or perspective of the present disclosure.

### [Description of Reference Numerals]

| | | | |
|---|---|---|---|
| 100: | first cell block assembly | 110: | battery cell stack |
| 120: | busbar frame | 200: | second cell block assembly |
| 210: | battery cell stack | 220: | busbar frame |
| 300: | module frame | 310: | module frame bottom portion |
| 320: | module frame side surface portion | 400: | upper plate |
| 401: | intermediate bottom portion | 402: | front end bottom portion |
| 403: | rear end bottom portion | 410: | first coupling member |
| 420: | second coupling member | 430: | third coupling member |
| 500: | insulating film | 600: | cooling plate |
| 610: | partition wall | 700: | thermally conductive resin layer |
| 800: | refrigerant supply portion | 810: | inlet |
| 900: | refrigerant discharge portion | 910: | outlet |
| P: | flow path | M: | battery module |
| A1, A2: | additional battery module | | |

## Claims

1. A battery module comprising:
first and second cell block assemblies that include a battery cell stack and are arranged along a direction perpendicular to the stacking direction of the battery cell stack;
a module frame that houses the first and second cell block assemblies and is opened in a front and rear direction; and
a cooling plate arranged below the bottom portion of the module frame,
wherein a flow path through which refrigerant flows is formed in the cooling plate, and the flow path is formed in a direction parallel to the arrangement direction of the first and second cell block assemblies.

2. The battery module of claim 1, wherein:
the cooling plate comprises a plurality of partition walls protruding upward from the bottom surface, and the partition walls are formed to extend in a direction parallel to an arrangement direction of the first and second cell block assemblies to form the flow path between the partition walls.

3. The battery module of claim 2, wherein:
the partition wall is formed so as to be separated from the front and rear end portions of the cooling plate.

4. The battery module of claim 1, wherein:
the bottom portion of the module frame is located at an upper side portion of the flow path.

5. The battery module of claim 1, wherein:
the cooling plate is formed in a size corresponding to the bottom portion of the module frame.

6. The battery module of claim 1, wherein:
the cooling plate is coupled by welding to the bottom portion of the module frame.

7. A battery pack comprising:
a battery module including first and second cell block assemblies; and
at least one additional battery module including first and second cell block assemblies that are further arranged in a direction perpendicular to a direction in which the first and second cell block assemblies face each other.

8. The battery pack of claim 7, wherein:
all front end portions of the flow paths of the cooling plates formed in the battery module and the additional battery module are connected to receive supply of a refrigerant through a refrigerant supply portion connected thereto, and all rear end portions of the flow paths of the cooling plates are connected to discharge the refrigerant through a refrigerant discharge portion connected thereto.

9. The battery pack of claim 8, wherein:
the refrigerant supply portion is connected to an inlet to receive supply of the refrigerant, and the refrigerant discharge portion is connected to an outlet to discharge the refrigerant.

10. A vehicle comprising the battery pack of claim 7,
wherein a direction in which the additional battery module is mounted based on the battery module is a longitudinal direction.
